# EUROPÄISCHE PATENTSCHRIFT

(11) **EP 1 300 295 B1**
(45) Veröffentlichungstag und Bekanntmachung des Hinweises auf die Patenterteilung: **11.01.2006**
(21) Anmeldenummer: 02020789.0
(22) Anmeldetag: 17.09.2002
(51) Int. Cl.: B60R 19/22, B60R 19/18

(54) **Energieabsorbierender Stossfänger**
Energy absorbing bumper
Pare-chocs à absorption d'énergie

(30) Priorität: 05.10.2001 DE 10149121
(43) Veröffentlichungstag der Anmeldung: 09.04.2003
(73) Patentinhaber: DaimlerChrysler AG, 70567 Stuttgart (DE)
(72) Erfinder: Arvelo, Eduardo, Derbyshire, DE12 7JZ (GB); Brown, Garry, Nuneaton, CV10 9TF (GB); Frank, Thomas, 70619 Stuttgart (DE); Rathje, Klaus, 71157 Hildrizhausen (DE); Ziegs, Maya, 72119 Ammerbuch (DE)

(56) Entgegenhaltungen:
- EP-A- 1 046 546
- DE-A- 2 505 169
- DE-A- 3 009 571
- GB-A- 2 033 535
- US-A- 3 836 192
- US-A- 4 762 352
- US-A- 5 100 187
- US-A- 5 785 367

## Beschreibung

Die Erfindung betrifft einen energieabsorbierenden Stoßfänger mit unter einer aufprallweichen Außenhaut bzw. -schale angeordnetem, die Außenhaut bzw. -schale nachgiebig abstützenden Strukturteil mit vom Querschnitt der Außenhaut bzw. -schale abweichendem Querschnitt.

Ein aus der DE 25 05 169 A1 bekannter derartiger Stoßfänger besitzt ein Strukturteil aus elastischen Abfall-Produktteilen, die mit einem Bindemittel, inbesondere einem Reaktionsharz, vergossen sind.

Bei einem in der DE 25 05 169 A1 beispielhaft dargestellten Stoßfänger besteht die Außenhülle bzw. -schale aus zwei separaten, zu einer Horizontalebene weitestgehend symmetrischen Schalenteilen, welche im Bereich einer Kontaktzone, die bei einem Zusammenstoß des Fahrzeuges mit einem Fußgänger zuerst beaufschlagt wird, freitragend angeordnet sind.

Aus der DE 17 55 512 A ist es bekannt, stoßgefährdete Teile der Außenfläche der Außenhaut eines Fahrzeuges, insbesondere eines Personenkraftfahrzeuges, mit einem elastisch und/oder plastisch nachgiebigen Kunststoff, insbesondere einem Schaumstoff, zu überziehen, wobei die Härte der Kunststoffschicht von außen nach innen abnehmen kann. Außerdem können an besonders exponierten Stellen, wie z.B. Stoßstangen oder Front- bzw. Heckklappen, Hohlkammern ausgebildet sein, die mit einem Fluid gefüllt sind, welches unter Stoßeinwirkung zu entweichen vermag.

In der EP 1 046 546 A1 wird ein Stoßfänger beschrieben, welcher im wesentlichen als Schaumstoffteil ausgebildet ist. Dieser Stoßfänger kann einen gegenüber seinem unteren Randbereich zurückversetzten mittleren und oberen Bereich aufweisen. Außerdem ist vorgesehen, den unteren Bereich mit erhöhter Steifigkeit auszubilden. Auf diese Weise soll bei Unfällen mit Fußgängern erreicht werden, daß Kollisionskräfte vorzugsweise in geringer Höhe über der Fahrbahn wirksam werden.

Gemäß der DE 30 09 571 A1 ist es bekannt, bei einem Straßenfahrzeug, insbesondere Straßenbahn, die Frontfläche so auszubilden, daß ein Fußgänger bei einer Kollision mit dem Fahrzeug nicht bzw. mit deutlich verminderter Wahrscheinlichkeit zur Seite geworfen wird.

Die EP 0 734 908 A2 zeigt einen als Biegeträger ausgebildeten und über pralltopfartige Verformungsglieder an Längsträgern der Karosserie eines Fahrzeuges abgestützten Stoßfänger.

Aus der US 5,100,187 A ist ein Stoßfänger mit einer Außenhaut beziehungsweise -schale und einer Rückseite bekannt, wobei zwischen Außenhaut und Rückseite eine aus Stegen und Kammern bestehende Struktur angeordnet ist. Diese Struktur ist zumindest teilweise mit Schaum ausgefüllt.

Aufgabe der Erfindung ist es nun, einen im Hinblick auf den Schutz von Fußgängern bei Kollisionen mit dem Fahrzeug optimalen Stoßfänger zu schaffen.

Diese Aufgabe wird mit einem Stoßfänger der eingangs angegebenen Art erfindungsgemäß dadurch gelöst, daß das Strukturteil aus verformbarem, energieabsorbierend komprimierbarem Schaumstoff oder ähnliche Eigenschaften aufweisendem Material mit energieabsorbierend stauchbarer Raumgitterstruktur besteht und zwischen einer Aufprall- bzw.

Kontaktzone der Außenhaut bzw. -schale und einer davon abgewandten Rückseite des Stoßfängers mit von der Außenhaut bzw. -schale des Stoßfängers abweichendem Querschnitt angeordnet ist.

Die Erfindung beruht auf dem allgemeinen Gedanken, für die Form der Außenhaut bzw. -schale des Stoßfängers eine weitestgehende designerische Freiheit zu ermöglichen und vor allem das Strukturteil mit einer bei Kollisionen mit Fußgängern optimalen Widerstands-Charakteristik ausbilden. Da innerhalb des Querschnittes der Außenhaut bzw. -schale des Stoßfängers vom Strukturteil Querschnittsbereiche frei gelassen werden, kann das Material des Strukturteiles bei einer Kollision auch quasi hydraulisch verdrängt werden, bevor der durch die jeweilige Kollision verminderte Querschnitt der regelmäßig wenig dehnfähigen Außenhaut bzw. -schale vollständig vom Material des Strukturteiles ausgefüllt und nachfolgend eine Absorption der Kollisionsenergie im wesentliche nur noch durch die Komprimierbarkeit des Materials des Strukturteiles erfolgen kann. In der Regel werden die quasi hydraulische Materialverdrängung sowie die Kompression bzw. Stauchung des Materials des Strukturteiles simultan erfolgen.

Außerdem wird aufgrund der unterschiedlichen Querschnitte von Außenhaut bzw. -schale bei einem nachgiebigen Strukturteil der Vorteil geboten, daß sich die Außenhaut bzw. -schale bei der Kollision vergleichsweise leicht tangential zur Außenebene verlagern und damit die Kollisionsfolgen für den Fußgänger auch dann deutlich vermindern kann, wenn die Kollisionsrichtung eine ausgeprägte Komponente tangential zur Außenoberfläche aufweist.

Gemäß einer besonders bevorzugten Ausführungsform der Erfindung ist an der Rückseite des Stoßfängers ein Verstärkungs-Innenteil angeordnet, welches zweckmäßig nach Art eines Flachbandes ausgebildet sein kann. Dadurch werden auf die Außenseite des Stoßfängers gegebenenfalls kleinflächig einwirkende Kollisionskräfte vergleichsweise großflächig auf hinter dem Stoßfänger angeordnete Fahrzeugteile abgetragen.

Die Anordnung des Verstärkungs-Innenteils ist besonders zweckmäßig, wenn der Stoßfänger mit diesem Innenteil auf einem ernergieabsorbierend verformbaren Biegeträger aufliegt, der regelmäßig bei Kollision des Fahrzeuges mit einem Fußgänger nicht verformt werden sondern erst bei höheren Kräften nachgeben soll.

Denn insbesondere in Kombination mit dem Verstärkungs-Innenteil läßt sich erreichen, daß der Biegeträger erst bei einen höheren Schwellwert übersteigender Kollisions- bzw. Aufprallenergie inelastisch nachgibt und ein maximales Verformungsmaß des Strukturteiles bei Beaufschlagung einer vorgegebenen Kollisions- bzw. Kontaktfläche erst bei einer diesen Schwellwert übersteigenden Aufprallenergie aufgezehrt wird. Im Ergebnis ist dies gleichbedeutend damit, daß auf kleine Bereiche der Außenseite einwirkende Kollisionskräfte zwar den Stoßfänger bis in die Nähe seiner Rückseite verformen können, jedoch nicht ohne weiteres auch den Biegeträger verformen.

Im übrigen wird hinsichtlich bevorzugter Merkmale der Erfindung auf die Ansprüche sowie die nachfolgende Erläuterung der Zeichnung verwiesen, anhand der besonders bevorzugte Ausführungsformen der Erfindung näher beschrieben werden.

Dabei zeigt
- Fig. 1: ein Schnittbild einer ersten Ausführungsform und
- Fig. 2: ein Schnittbild einer abgewandelten Ausführungsform.

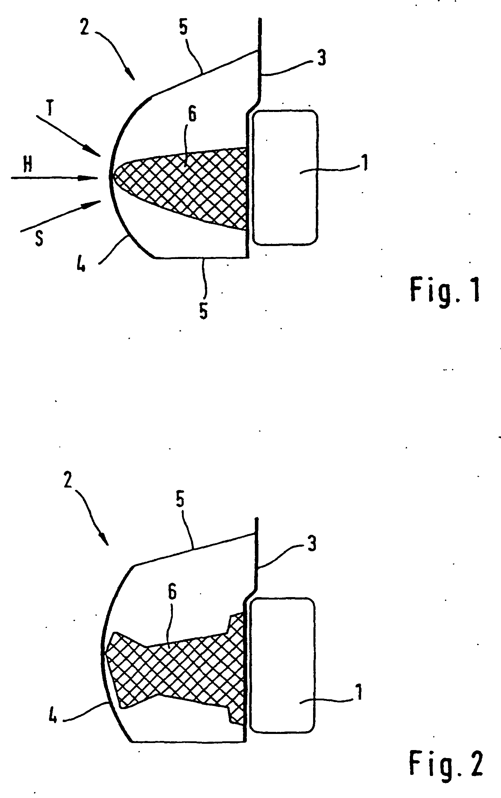

Gemäß Fig. 1 trägt ein energieabsorbierend verformbarer Biegeträger 1, der Teil einer nicht näher dargestellten Karosseriestruktur eines Personenkraftwagens ist, einen Stoßfänger 2. Dieser besteht im wesentlichen aus einem auf dem Biegeträger 1 aufliegend angeordneten flachbandartigen Verstärkungs-Innenteil 3, einer verbiegbaren Außenverkleidung 4, die unmittelbar oder über verbiegbare Halterelemente 5 mit dem Verstärkungs-Innenteil 3 verbunden ist, sowie einem Schaumstoff-Strukturteil 6, welches zwischen dem Verstärkungs-Innenteil 3 und einer bei Unfällen des Fahrzeuges mit Fußgängern nach Wahrscheinlichkeit zuerst beaufschlagten Kontaktzone der Außenverkleidung 4 angeordnet ist.

Erfindungsgemäß besitzt das Strukturteil 6 einen von der Außenverkleidung 4 deutlich abweichenden Querschnitt, wobei die Querschnittsform des Strukturteiles 6 unter dem Gesichtspunkt einer optimalen Energieabsorption bei Kollisionen des Fahrzeuges mit Fußgängern ausgelegt ist.

Im dargestellten Beispiel nimmt die Höhe des Querschnittes des Schaustoff-Strukturteiles 6 in Richtung des Verstärkungs-Innenteiles zu. Darüber hinaus liegt die vertikale Mitte des Querschnittes des Schaumstoff-Strukturteiles 6 an der Außenverkleidung 4 vertikal höher als am Verstärkungsinnenteil 3.

Im Ergebnis wird dadurch erreicht, daß bei horizontaler Stoßbeaufschlagung entsprechend dem Pfeil H vom Schaumstoff-Strukturteil 6 ein progressiv zunehmender Widerstand erzeugt wird. Darüber hinaus wird einer aufwärts gerichteten Stoßrichtung entsprechend dem Pfeil S ein geringerer Widerstand entgegengesetzt als einer abwärts gerichteten Stoßrichtung entsprechend dem Pfeil T.

Bei den durch eine Kollision verursachten Verformungen des Schaumstoff-Strukturteiles 6 kann einerseits eine Verformung durch quasi hydraulische Verdrängung von Material des Schaumstoff-Strukturteiles quer zur jeweiligen Stoßrichtung erfolgen. Anderseits erfolgt auch eine Verformung unter Verringerung des Volumens des Schaumstoff-Strukturteiles.

Solange die genannten Verformungen eine kleineres Ausmaß haben, können sie gegebenenfalls reversibel sein, d.h. das Schaumstoff-Strukturteil 6 sowie die ebenfalls verformte Außenverkleidung 4 können wiederum ihre ursprüngliche Form annehmen. Wichtig ist jedoch, daß die Verformungen inelastisch bzw. unter Energieabsorption, d.h. unter Umwandlung mechanischer Stoßenergie in Wärme, erfolgen und die Rückverformung eine vergleichsweise große Zeit benötigt.

Die Ausführungsform der Fig. 2 unterscheidet sich von der Ausführungsform der Fig. 1 vor allem durch einen anderen Querschnitt des Schaumstoff-Strukturteiles 6. Im Beispiel der Fig. 2 hat das Strukturteil 6 an der Kollisions-Kontaktzone der Außenverkleidung 4 einen Querschnitt mit großer vertikaler Höhe. Erst mit größerem Abstand von der Kollisions-Kontaktzone ist eine deutliche Einschnürung des Querschnittes vorgesehen, welcher dann im übrigen zum Verstärkungs-Innenteil 3 hin wieder zunimmt, wobei nahe des Verstärkungs-Innenteiles 3 eine ausgeprägte Querschnittsvergrößerung in vertikaler Richtung vorhanden ist.

Da das Schaumstoff-Strukturteil 6 an der Kontaktzone der Außenverkleidung 4 in einem oberen Bereich einen größeren horizontalen Abstand von dem Verkleidungs-Innenteil 3 hat als an einem unteren Bereich, wird das Schaumstoff-Strukturteil 6 bei zunächst auf die vorgenannte obere Zone einwirkenden horizontalen Kollisionskräften auch auf Biegung beanspruch, d.h. im dargestellten Beispiel sucht sich der der Außenverkleidung 4 benachbarte Bereich des Strukturteiles vor der Querschnittseinschnürung bei den vorgenannten Kollisionskräften im Uhrzeigersinn zu drehen.

Das Strukturteil 6 kann aus einem Kunststoffschaum, vorzugsweise mit geschlossener Zellstruktur, bestehen. Grundsätzlich sind jedoch auch andere Materialien geeignet, z.B. Metallschäume oder Kunststoff- bzw. Metallvliese.

Das Strukturteil 6 kann zur Anpassung der Steifigkeit an unterschiedliche Gegebenheiten über die Fahrzeugbreite lokal unterschiedlich ausgebildet sein, d.h. der Querschnitt und/oder die Dichte des Materials des Strukturteils werden an unterschiedlichen Anstoßstellen des Fußgängers an die jeweiligen Gegebenheiten der Fahrzeugstruktur bzw. an integrierte Bauteile, wie z.B. Nebelleuchten oder Kennzeichenträgern od.dgl., angepaßt.

## Patentansprüche

1. Energieabsorbierender Stoßfänger (2) mit unter einer Außenhaut bzw. -schale (4) angeordnetem, die Außenhaut nachgiebig abstützendem Strukturteil (6), wobei das Strukturteil (6) aus verformbaren und energieabsorbierend komprimierbaren Schaumstoff oder ähnliche Eigenschaften aufweisendem Material mit energieabsorbierend stauchbarer Raumgitterstruktur besteht und zwischen einer Aufprall- bzw. Kontaktzone der Außenhaut bzw. -schale (4) und einer davon abgewandten Rückseite des Stoßfängers (2) angeordnet ist,
**dadurch gekennzeichnet,**
**dass** der Querschnitt des Strukturteils (6) von dem Querschnitt der Außenhaut beziehungsweise -schale (4) abweicht und zumindest in einem Teilabschnitt von der Außenhaut beziehungsweise -schale (4) zur Rückseite des Stoßfängers zunimmt.

2. Stoßfänger nach Anspruch 1,
**dadurch gekennzeichnet,**
**daß** an der Rückseite ein Verstärkungs-Innenteil (3) angeordnet ist.

3. Stoßfänger nach Anspruch 2,
**dadurch gekennzeichnet,**
**daß** das Verstärkungs-Innenteil (3) nach Art eines Flachbandes ausgebildet ist.

4. Stoßfänger nach Anspruch 2 oder 3,
**dadurch gekennzeichnet,**
**daß** der Stoßfänger mit dem Verstärkungs-Innenteil (3) auf einem energieabsorbierend verformbaren Biegeträger (1) aufliegt, der sich erst bei erhöhter Kollisionsenergie verformt.

5. Stoßfänger nach Anspruch 4,
**dadurch gekennzeichnet,**
**daß** der Biegeträger (1) erst bei einen Schwellwert übersteigender Aufprallenergie inelastisch nachgiebt und ein maximales Verformungsmaß des Strukturteiles (6) bei Beaufschlagung einer vorgegebenen Kontaktfläche erst bei einer diesen Schwellwert übersteigenden Aufprallenergie aufgezehrt wird.

## Claims

1. Energy-absorbing bumper (2) with a structural part (6) which is arranged underneath an outer skin or shell (4) and supports the outer skin in a flexible manner, the structural part (6) being composed of foam capable of deformation and energy-absorbing compression or of a material having similar properties and a space-lattice structure that can be crushed in a manner that involves energy absorption, and being arranged between an impact or contact zone of the outer skin or shell (4) and a rear side of the bumper (2) facing away from the latter, **characterized in that** the cross section of the structural part (6) differs from the cross section of the outer skin or shell (4) and increases at least in a partial section from the outer skin or shell (4) to the rear side of the bumper.

2. Bumper according to Claim 1, **characterized in that** a reinforcing inner part (3) is arranged on the rear side.

3. Bumper according to Claim 2, **characterized in that** the reinforcing inner part (3) is in the form of a flat strip.

4. Bumper according to Claim 2 or 3, **characterized in that** the bumper rests by means of the reinforcing inner part (3) on a beam (1) capable of deformation in an energy-absorbing manner, which is deformed only at a relatively high collision energy.

5. Bumper according to Claim 4, **characterized in that** the beam (1) yields inelastically only at an impact energy that exceeds a threshold, and a maximum degree of deformation of the structural part (6) upon loading of a predetermined contact area is used up only at an impact energy that exceeds this threshold.

## Revendications

1. Pare-chocs à absorption d'énergie (2) comprenant une partie structurelle (6) disposée sous une peau extérieure ou une coque extérieure (4), supportant de manière élastique la peau extérieure, la partie structurelle (6) se composant de mousse déformable et comprimable par absorption d'énergie ou d'un matériau présentant des propriétés similaires, avec une structure à réseau tridimensionnelle et étant disposée entre une zone de choc ou de contact de la peau extérieure ou de la coque extérieure (4) et un côté arrière du pare-chocs (2) opposé à celle-ci,
**caractérisé en ce que**
la section transversale de la partie structurelle (6) s'écarte de la section transversale de la peau extérieure ou de la coque extérieure (4) et augmente au moins dans une section partielle depuis la peau extérieure, respectivement la coque extérieure (4) vers le côté arrière du pare-chocs.

2. Pare-chocs selon la revendication 1,
**caractérisé en ce**
**qu'**une partie interne de renforcement (3) est disposée sur le côté arrière.

3. Pare-chocs selon la revendication 2,
**caractérisé en ce que**
la partie interne de renforcement (3) est réalisée à la manière d'une bande plate.

4. Pare-chocs selon la revendication 2 ou 3,
**caractérisé en ce que**
le pare-chocs s'applique avec la partie interne de renforcement (3) sur un support flexible (1) déformable par absorption d'énergie, qui se déforme seulement pour une énergie de collision relativement élevée.

5. Pare-chocs selon la revendication 4,
**caractérisé en ce que**
le support flexible (1) fléchit de manière non élastique à partir d'une énergie de choc dépassant une valeur seuil et un degré de déformation maximum de la partie structurelle (6) est épuisé dans le cas d'une sollicitation d'une surface de contact prédéfinie à partir d'une énergie de choc dépassant cette valeur seuil.
